# EUROPEAN PATENT SPECIFICATION

(11) **EP 4 324 660 B1**
(45) Date of publication and mention of the grant of the patent: **18.06.2025**
(21) Application number: 22191003.7
(22) Date of filing: 18.08.2022
(51) Int. Cl.: B60B 7/00, B60B 7/02, B60B 7/06, B60B 7/18

(54) **WHEEL ASSEMBLY FOR A VEHICLE**
RADANORDNUNG FÜR EIN FAHRZEUG
ENSEMBLE ROUE POUR UN VÉHICULE

(43) Date of publication of application: 21.02.2024
(73) Proprietor: Volvo Car Corporation, 40531 Göteborg (SE)
(72) Inventor: CAVELSTRÖM, Carl-Henric, 40531 Göteborg (SE)
(74) Representative: Maiwald GmbH

(56) References cited:
- EP-A2- 0 808 728
- WO-A1-87/00802
- US-A1- 2008 001 468

## Description

### TECHNICAL FIELD

The present invention relates to a wheel assembly for a vehicle, a wheel system comprising such a wheel assembly, a vehicle comprising such a wheel system and a method for manufacturing a wheel assembly for a vehicle.

### BACKGROUND ART

Car aerodynamics is an important factor affecting performance of a car. Particularly, wheels of the car have a crucial influence on the aerodynamic performance by causing aerodynamic drag when driving the car.

Most car wheels are made of casted or forged aluminum, which is usually designed for only one side of the vehicle, e.g. left-hand side. The same wheels are generally used on both sides. This may cause the wheel to "roll backwards" on the other side, e.g. right-hand side. Even if the design of the wheel is focused on aerodynamics for the left side wheel, when putting the same wheel at the right side, the total aerodynamics of the car will be unbalanced. Furthermore, a turbulent airflow may occur inside the wheel, such as in a wheel box, due to structural reasons of the wheel. US 2008/0001468 A1 discloses a motorcycle wheel assembly, which comprises a wheel having opposite outer surfaces, and a pair of claddings covering the opposite surfaces to provide an aesthetic covering on both sides of the associated wheel assembly. The claddings cooperate and engage one another to securely attach to the associated wheel, to provide alignment therebetween, to provide a wheel assembly having the aesthetic appearance of a solid wheel and other aesthetic improvements.

### SUMMARY

Hence, there may be a need to provide an improved wheel assembly, which may enhance aerodynamics of a vehicle.

The problem is at least partially solved or alleviated by the subject matter of the independent claims of the present invention, wherein further examples are incorporated in the dependent claims. It should be noted that the aspects of the invention described in the following apply to the wheel assembly for a vehicle, the wheel system comprising such a wheel assembly, the vehicle comprising such a wheel system and the method for manufacturing a wheel assembly for a vehicle.

According to the present invention, a wheel assembly for a vehicle is presented. The wheel assembly comprises a rim body formed in a cylindrical shape, a first cover element, and a second cover element. The rim body comprises at least a wheel disc element arranged in an axial direction of the rim body. The first cover element is arranged at a first side of the wheel disc element and the second cover element is arranged at a second side of the wheel disc element along the axial direction of the rim body. The rim body comprises a first material. The first cover element and the second cover element comprise a second material. The first material differs from the second material, and the first cover element and the second cover element are formed differently from each other.

The wheel assembly according to the present invention may be formed individually and/or differently for a left side and a right side of the vehicle. Accordingly, wheel aerodynamics of the vehicle may be improved and energy efficiency of the vehicle may be increased. Further, by providing two separate cover elements, a shape and a material of the rim body may be individually selected. Hence, tooling costs of the rim body may be reduced despite variations in the design of the wheel assembly.

The wheel assembly may be suitable to be mounted at a motor vehicles such as cars, trucks, busses, mobility scooters, etc. The rim body, in other words a barrel portion of the wheel assembly, may be shaped cylindrically. The rim body may be formed to fixedly hold a tire along a circumference of the rim body. The rim body may comprise a front surface and a rear surface, wherein the front surface may be directed outside the vehicle and the rear surface may be directed inside, e.g. to a platform chassis of the vehicle.

The rim body may comprise at least one wheel disc element. The wheel disc element may be formed in a circular shape and arranged at the front surface, the rear surface of the rim body or inside the rim body. Accordingly, the rim body and the wheel disc element may be arranged coaxially. The rim body and the wheel disc element may be formed separately and fixedly attached together, for instance by welding or they may be integrally manufactured.

The wheel disc element may comprise a plurality of spokes arranged in a radial direction of the wheel disc element. The spokes may be rib-shaped and extend from a center of the wheel disc element to an outer edge of the wheel disc element. Between the spokes an opening may be positioned to facilitate airflow inside the rim body.

Since the wheel disc element may be coaxially arranged with the rim body, the first side of the wheel disc element may be identical with or parallel to the front side of the rim body and the second side of the wheel disc element may be identical with or parallel to the rear side of the rim body and vice versa.

The wheel disc element, the rim body, first cover element and/or the second cover element may be arranged coaxially with each other. Preferably, the first cover element and the second cover element may be arranged along the axial direction of the rim body.

The first cover element and the second cover element may be arranged opposite one another relative to the wheel disc element. In other words, the wheel disc element may be surrounded by the first cover element and the second cover element. The first cover element may be directed to the front side of the rim body and the second cover element may be directed to the rear side of the rim body and vice versa.

A combination of the first cover element, the wheel disc element and the second cover element may be arranged together at the front side or the rear side of the rim body. Alternatively, they may be also arranged substantially at a middle of the rim body along the axial direction of the rim body.

The first material for the rim body and the second material for the first cover element and the second cover element may comprise substantially different materials. The first material may be selected to ensure a light-weight and a high strength of the rim body. Whereas, the second material may be selected to ensure a light-weight as well, but also for an easy process to realize a desired cover design. Accordingly, the first cover element and the second cover element may be individually designed and manufactured regardless of an assembling position such as front-right side, front-left side, etc. at the vehicle. Alternatively, the first material and the second material may comprise the same material.

In an example, the first cover element and the second cover element may comprise the same material. Alternatively, the first cover element and the second cover element may comprise different material from each other. However, the selected materials for the first cover element and the second cover element may have to comprise a high machinability.

The first cover element, which may be directed outside the vehicle, may be adapted to fulfill requirements of design, vehicle's aerodynamic performances, such as total drag, surrounding airflow field resulting negative drift, etc. The second cover element, which may be directed inside the rim body or the vehicle, may be adapted to allow a smooth airflow through the wheel assembly to minimize a turbulent airflow. The first cover element and the second cover element may comprise substantially the same design. However, the first cover element and the second cover element may be formed differently from each other, particularly in regard to the assembling position at the vehicle.

In an example, each of the first cover element and the second cover element comprises a plurality of venting holes. The first cover element may be adapted to allow an airflow through the first cover element to effectively ventilate the brake system, which may be also arranged adjacent to the wheel assembly. Similarly, the second cover element may be adapted to allow an airflow through the second cover element to effectively ventilate the brake system.

The plurality of venting holes may be arranged in a radial direction of the first cover element and the second cover element, respectively. For instance, the plurality of venting holes of the first cover element may be aligned with the openings of the wheel disc element to increase the aerodynamic performances of the wheel assembly, wherein the openings of the wheel disc element may be defined by the rib-shaped spokes of the wheel disc element. Alternatively or additionally, the plurality of venting holes of the second cover element may be aligned with the openings of the wheel disc element to increase the aerodynamic performances of the wheel assembly.

In an example, the plurality of venting holes of the first cover element is arranged aligned with the plurality of venting holes of the second cover element forming a plurality of venting channels through the rim body. The plurality of venting holes of the first cover element, the openings of the wheel disc element and the plurality of venting holes of the second cover element may be aligned with each other such that each combination of a venting hole of the first cover element, an opening of the wheel disc element and a venting hole of the second cover element may form a venting channel.

In other words, the venting channel may be formed from the first cover element to the second cover element through the wheel disc element of the rim body. Accordingly, the airflow through the wheel assembly may be increased and cooling of the brake system may be enhanced. Further, the aerodynamic performances of the wheel assembly can be also improved.

In an example, the first side is an outer side of the wheel disc element exposed to an environment and the second side is an inner side of the wheel disc element directed to an interior of the rim body. In other words, the first side may be directed outside the vehicle and the second side may be directed to another wheel assembly mounted at an opposite side relative to a vehicle body, when mounted at the vehicle.

Accordingly, the first cover element may be arranged at the rim body, preferably at the wheel disc element, exposed to surroundings of the vehicle and the second cover element may be arranged at the rim body, preferably at the wheel disc element, adjacent to the platform chassis of the vehicle, when the wheel assembly is mounted at the vehicle.

In an example, the plurality of venting holes of the first cover element is formed to be compatible with a driving direction of the vehicle. The plurality of venting holes may be adapted to improve the aerodynamic performances by smoothly guiding the airflow over the first cover element. Specifically, if the first cover element is arranged at the outer side of the wheel disc element exposed to the environment, its surface structure may influence significantly the aerodynamic performances of the vehicle.

Generally, the plurality of venting holes may be formed regardless of its mounting position at the vehicle. However, if the venting holes of such conventional cover element are shaped having a specific structure, which may be inclined in a radial and/or tangential direction of the rim body, the conventional cover element may affect the aerodynamic performances of the vehicle differently depending on its mounting position. For instance, the venting holes of the conventional cover element may be suitably formed for a left side of the vehicle relative to the driving direction of the vehicle. If such cover element is arranged at a right side of the vehicle, the aerodynamic performances at the right side of the vehicle may be significantly deteriorated.

However, since the second material forming the first cover element may be selected for the easy machinability, the first cover element may be individually designed and manufactured with respect to its mounting position at the vehicle, such as front left side, front right side, rear left side or rear right side. In other words, the first cover element may be formed in conformity with its mounting position and the driving direction of the vehicle to reduce the aerodynamic drag and maximize the aerodynamic performances of the vehicle.

In an example, the second cover element comprises a seamless surface. The second cover element, which may be arranged at the inner side of the wheel disc element directed to the interior of the rim body, may be adapted to smoothly draw the airflow passing through the wheel assembly, e.g. the plurality of venting channels. In particular, the surface of the second cover element exposed to the interior of the rim body may comprise a smooth surface, i.e. seamless surface. Accordingly, the airflow sing through the plurality of venting channels may cause less turbulence, which may lead to less energy consumption.

In an example, the first material comprises a metallic material. The rim body may comprise a metallic material such as steel, aluminum or magnesium to ensure a light weight and a high strength of the rim body.

In an example, the second material comprises a plastic material. The plastic material may allow the high machinability or processability, which may allow each of the first cover element and the second cover element to be individually designed in regard to its mounting position at the vehicle. For instance, the plastic material may have a thickness of 3 mm or less. However, the thickness may be also larger than 3 mm. The plastic material may comprise, for instance, a polyphenylene ether-polyamide (PPE-PA) mixture. The plastic material may be a thermoplastic blend and permanently retain its impact strength, low density and temperature resistance.

In an example, the first cover element and/or the second cover element is mounted at the rim body by at least one clamping means. The first cover element and/or the second cover element may be fixedly attached to the rim body, particularly the wheel disc element by applying one or more clamping means. The clamping means may comprise a clip, a snap, or the like. The clamping means may be arranged at the first cover element, second cover element and/or the rim body.

The clamping means may be formed to ensure the smooth airflow surface to minimize the turbulent airflow at the rim body and/or a wheel house. Accordingly, the clamping means may be formed to hold the first cover element and/or the second cover element in direction to the wheel disc element. In an example, the first cover element and the second cover element may be engaged with each other via the wheel disc element by the clamping means.

In an example, the at least one clamping means is integrally formed with the first cover element and/or the second cover element. Such clamping means may enable a gapless engagement of the first cover element and the second cover element via the wheel disc element. Thus, the turbulent airflow at the rim body and/or the wheel house may be minimized and the aerodynamic performances of the wheel assembly may be improved.

In an example, the first cover element and/or the second cover element is mounted at the rim body by at least one mechanical fixing means. Alternatively or additionally to the clamping means, the first cover element and/or the second cover element may be fixedly attached to the rim body by the mechanical fixing means such as screw, bolt, etc. However, such mechanical fixing means may be arranged at the first cover element and/or the second cover element to ensure the smooth airflow surface to minimize the turbulent airflow at the rim body and/or the wheel house.

In an example, the first cover element and/or the second cover element is mounted at the rim body using an adhering means. Alternatively or additionally to the clamping means and/or the mechanical fixing means, the first cover element and/or the second cover element may be also adhered to the wheel disc element of the rim body by applying a tape, a glue, etc.

According to the present invention, a wheel system is also presented. The wheel system comprises at least a first and a second wheel assemblies as described above. The first wheel assembly is arrangeable on a left side of the vehicle and the second wheel assembly is arrangeable on a right side of the vehicle relative to a driving direction of a vehicle. The wheel system may comprise at least two wheel assemblies, which may be arranged at the front side or rear side relative to the driving direction of the vehicle. Preferably, the first wheel assembly and the second wheel assembly may be adapted to be mounted at the vehicle to face each other.

According to the present invention, a first cover element of the first wheel assembly and a first cover element of the second wheel assembly are formed mirrored relative to each other. The first cover element of the first wheel assembly may be designed to be compatible with the driving direction of the vehicle and the first cover element of the second wheel assembly may be designed to be compatible with the driving direction of the vehicle as well.

In other words, a plurality of venting holes of the first cover element is formed to be compatible with the driving direction of the vehicle. Likewise, a plurality of venting holes of the second cover element is formed to be compatible with the driving direction of the vehicle. Accordingly, the plurality of venting holes of each cover element may be formed to effectively guide the airflow along the driving direction of the vehicle.

A second cover element of each wheel assembly may be formed based on an arrangement of the venting holes of the respective first cover element. The second cover element of the first wheel assembly and the second cover element of the second wheel assembly may be shaped substantially same or differently from each other.

According to the present invention, a vehicle is also presented. The vehicle comprises a wheel system as described above. The vehicle may be a motor vehicle such as cars, trucks, busses, mobility scooters, etc. The vehicle may comprise at least two, preferably four or more wheel assemblies, at each of which a tire may be mounted. Preferably, a pair of wheel assemblies may be arranged at a vehicle body, e.g. platform chassis of the vehicle, facing each other. A first cover element of a first wheel assembly may be formed same as a first cover element of a second wheel assembly. Alternatively, the first cover element of the first wheel assembly may be formed mirrored relative to the first cover element of the second wheel assembly. Accordingly, aerodynamic performances of the vehicle may be improved and an energy efficiency of the vehicle may be increased.

According to the present invention, a method for manufacturing a wheel assembly for a vehicle is also presented in claim 13.

### BRIEF DESCRIPTION OF DRAWINGS

Examples according to the present invention will be described in the following with reference to the following drawings.
- Fig. 1a, 1b: show schematically and exemplarily an example of a vehicle comprising a conventional wheel assembly.
- Fig. 2a, 2b: show schematically and exemplarily an example of a vehicle comprising a wheel assembly according to the present invention.
- Fig. 3a, 3b, 3c: show schematically and exemplarily an example of a wheel assembly according to the present invention.
- Fig. 4: shows schematically and exemplarily an example of a wheel assembly according to the present invention.

### DESCRIPTION OF EXAMPLES

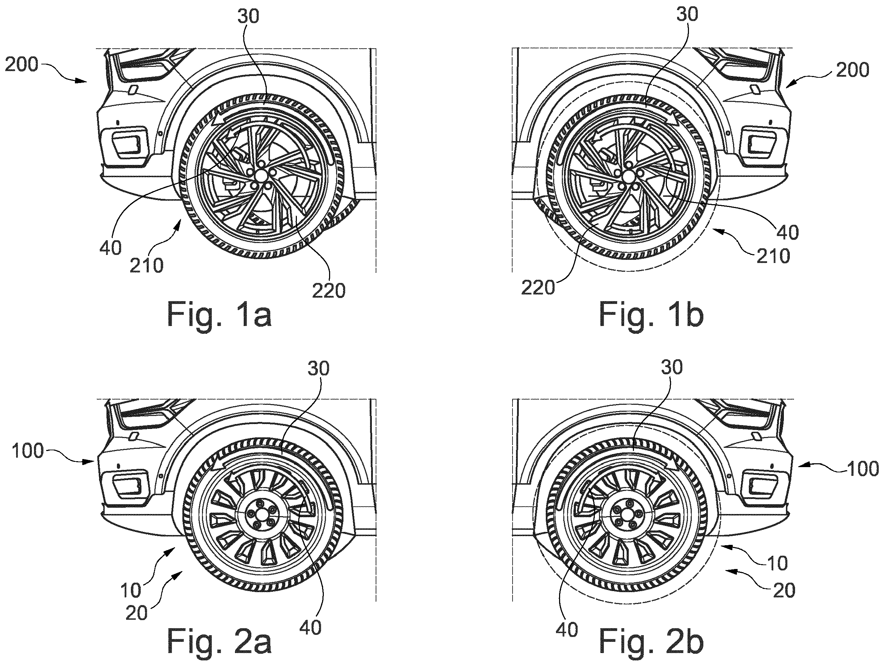

Fig. 1a and 1b show a vehicle 200 comprising a conventional wheel assembly 210. Generally, an outer cover element 220 and/or an outer structure of the conventional wheel assembly 210 is adapted to fulfill design requirements. Accordingly, the conventional cover element 220 or the outer structure of the conventional wheel assembly 210 may be formed for one mounting position of the wheel assembly 210 as shown in Fig. 1a and the same wheel assembly 210is generally mounted at another position of the vehicle 200 as shown in Fig. 1b.

In other words, a rotation direction 30 of the conventional wheel assembly 210 is same as a design direction 40 of the conventional wheel assembly 210 on a left side of the vehicle 200, as shown in Fig. 1a. However, the rotation direction 30 of the conventional wheel assembly 210 differs from the design direction 40 of the conventional wheel assembly 210 on a right side of the vehicle 200, as shown in Fig. 1b. In case of Fig. 1a, a smooth airflow around the wheel assembly 210 may occur. In contrast, in case of Fig. 1b, a turbulent airflow may not be avoided which may significantly deteriorate the aerodynamic performances of the vehicle 200.

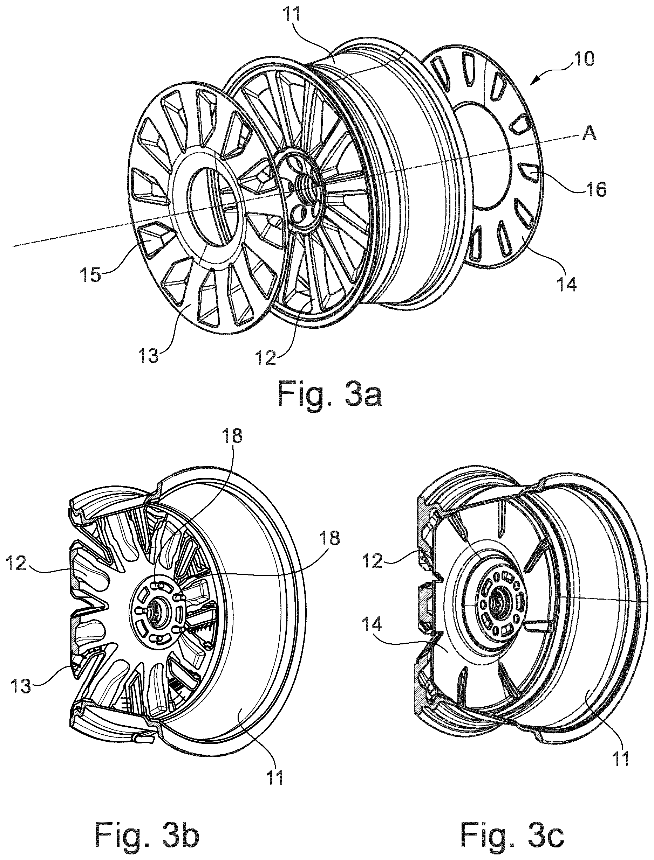

Fig. 2a and 2b show a vehicle 100 comprising a pair of wheel assembly 10 of a wheel system 20 according to the present invention. As shown in Fig. 3a, each wheel assembly 10 comprises a rim body 11 formed in a cylindrical shape, a first cover element 13, and a second cover element 14. The rim body 11 comprises at least a wheel disc element 12 arranged in an axial direction A of the rim body 11. The first cover element 13 is arranged at an outer side of the wheel disc element 12 exposed to environment of the vehicle 100 and the second cover element 14 is arranged at an inner side of the wheel disc element 12 directed to an interior of the rim body 11.

The rim body 11 comprises a metallic material such as steel, aluminum or magnesium to ensure a light-weight and a high strength of the rim body 11. Whereas, the first cover element 13 and the second cover element 14 comprise a plastic material such as a polyphenylene ether-polyamide (PPE-PA) blend allowing a high machinability or processability. Accordingly, each of the first cover element 13 and the second cover element 14 can be individually designed in regard to its mounting position at the vehicle 100.

For instance, the first cover element 13 of a first wheel assembly 10 and the first cover element 13 of a second wheel assembly 10 may be formed mirrored relative to each other (see Fig. 2a and 2b) to maximize the aerodynamic performances of the vehicle. Hence, the rotation direction 30 of the wheel assembly 10 is same as the design direction 40 of the wheel assembly 10 on the left side of the vehicle 100, as shown in Fig. 2a. Further, the rotation direction 30 of the wheel assembly 10 is also same as the design direction 40 of the wheel assembly 10 on the right side of the vehicle 100, as shown in Fig. 2b.

As shown in Fig. 3a and 3b, each of the first cover element 13 and the second cover element 14 comprises a plurality of venting holes 15, 16. The first cover element 13 can be formed in conformity with its mounting position and the driving direction 30 of the vehicle to reduce the aerodynamic drag and maximize the aerodynamic performances of the vehicle 100. The plurality of venting holes 15 of the first cover element 13 is arranged aligned with the plurality of venting holes 16 of the second cover element 14 forming a plurality of venting channels 19 through the rim body 11. Accordingly, an effective ventilation of a brake system (not shown), which may be mounted adjacent to the wheel assembly 10, may be achieved.

Further, as shown in Fig. 3c, the second cover element 14 comprises a seamless surface, which may be adapted to smoothly draw the airflow passing through the plurality of venting channels 19.

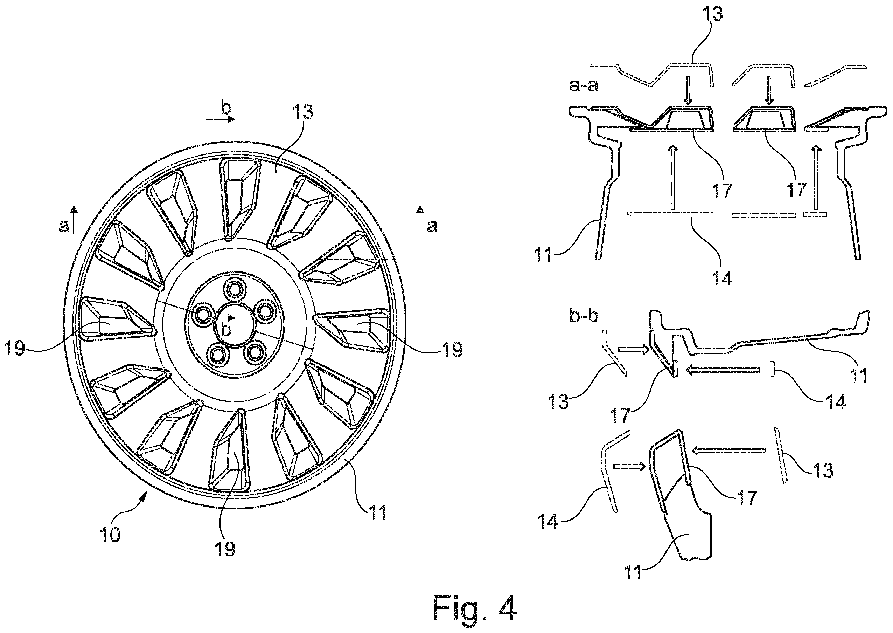

Fig. 4 shows three sectional view of the wheel assembly 10, in which the first cover element 13 and/or the second cover element 14 is mounted at the rim body 11 by at least one clamping means 17. The at least one clamping means 17 is integrally formed with the first cover element 13 and/or the second cover element 14. The clamping means may form one or more resilient portions at each of the first cover element 13 and/or the second cover element 14 to be fit into the wheel disc element 12.

Such clamping means 17 may enable a gapless engagement of the first cover element 13 and the second cover element 14 via the wheel disc element 12. Thus, the turbulent airflow at the rim body 11 and/or the wheel house may be minimized and the aerodynamic performances of the wheel assembly 10 may be improved.

Alternatively or additionally to the clamping means 17, the first cover element 13 and/or the second cover element 14 may be fixedly attached to the rim body 11 by mechanical fixing means 18 such as screw, bolt, etc. (see also Fig. 3b). Further, the first cover element 13 and/or the second cover element 14 may be also mounted at the rim body 11 using an adhering means such as a tape, a glue, etc.

While the invention has been illustrated and described in detail in the drawings and description, such illustration and description are to be considered illustrative or exemplary and not restrictive. The invention is not limited to the disclosed examples, but by the scope of the appended claims.

## Claims

1. A wheel system (20) for a vehicle (100), comprising at least a first and a second wheel assembly (10),
the first and the second wheel assembly (10) each comprising,
- a rim body (11) formed in a cylindrical shape,
- a first cover element (13), and
- a second cover element (14),
the rim body (11) comprising at least a wheel disc element (12) arranged in an axial direction (A) of the rim body (11),
the first cover element (13) being arranged at a first side of the wheel disc element (12) and the second cover element (14) being arranged at a second side of the wheel disc element (12) along the axial direction of the rim body (11),
the rim body (11) comprising a first material,
the first cover element (13) and the second cover element (14) comprising a second material,
the first material differing from the second material,
the first cover element (13) and the second cover element (14) being formed differently from each other, and
the first wheel assembly (10) being arrangeable on a left side of the vehicle (100) and the second wheel assembly (10) being arrangeable on a right side of the vehicle (100) relative to a driving direction (20) of the vehicle (100),
wherein the first cover element (13) of the first wheel assembly (10) and the first cover element (13) of the second wheel assembly (10) being formed mirrored relative to each other.

2. The wheel system (20) according to claim 1, each of the first cover element (13) and the second cover element (14) comprising a plurality of venting holes (15, 16).

3. The wheel system (20) according to claim 2, the plurality of venting holes (15) of the first cover element (13) being arranged aligned with the plurality of venting holes (16) of the second cover element (14) forming a plurality of venting channels (19) through the rim body (11).

4. The wheel system (20) according to any of the preceding claims, the first side being an outer side of the wheel disc element (12) exposed to an environment and the second side being an inner side of the wheel disc element (12) directed to an interior of the rim body (11).

5. The wheel system (20) according to any of the claims 2 to 4, the plurality of venting holes of the first cover element (13) being formed to be compatible with a driving direction of the vehicle (100).

6. The wheel system (20) according to any of the preceding claims, the second cover element (14) comprising a seamless surface.

7. The wheel system (20) according to claim 1, the first material comprising a metallic material.

8. The wheel system (20) according to claim 1, the second material comprising a plastic material.

9. The wheel system (20) according to any of the preceding claims, the first cover element (13) and/or the second cover element (14) being mounted at the rim body (11) by at least one clamping means (17).

10. The wheel system (20) according to the preceding claim, the at least one clamping means (17) being integrally formed with the first cover element (13) and/or the second cover element (14).

11. The wheel system (20) according to any of the preceding claims, the first cover element (13) and/or the second cover element (14) being mounted at the rim body (11) by at least one mechanical fixing means (18).

12. A vehicle (100) comprising a wheel system (20) according to any of the preceding claims.

13. A method for manufacturing a wheel system (20) comprising at least a first and a second wheel assembly (10), the first wheel assembly (10) being arrangeable on a left side of a vehicle (100) and the second wheel assembly (10) being arrangeable on a right side of the vehicle (100) relative to a driving direction (20) of the vehicle (100), the method comprising for each wheel assembly (10) the following steps:
- providing a rim body (11) formed in a cylindrical shape and comprising at least a wheel disc element (12) arranged in an axial direction (A) of the rim body (11),
the rim body (11) comprising a first material,
- providing a first cover element (13) comprising a second material and a second cover element (14) comprising the second material, and
- arranging the first cover element (13) at a first side of the wheel disc element (12) and arranging the second cover element (14) at a second side of the wheel disc element (12) along the axial direction of the rim body (11),
the first material differing from the second material,
the first cover element (13) and the second cover element (14) being formed differently from each other, and
the first cover element (13) of the first wheel assembly (10) and the first cover element (13) of the second wheel assembly (10) being formed mirrored relative to each other.

## Patentansprüche

1. Radsystem (20) für ein Fahrzeug (100), aufweisend mindestens eine erste und eine zweite Radbaugruppe (10),
wobei die erste und die zweite Radbaugruppe (10) jeweils aufweisen,
- einen zylindrisch ausgebildeten Felgenkörper (11),
- ein erstes Abdeckungselement (13), und
- ein zweites Abdeckungselement (14),
wobei der Felgenkörper (11) mindestens ein Radscheibenelement (12) umfasst, das in einer axialen Richtung (A) des Felgenkörpers (11) angeordnet ist,
wobei das erste Abdeckelement (13) an einer ersten Seite des Radscheibenelements (12) angeordnet ist und das zweite Abdeckelement (14) an einer zweiten Seite des Radscheibenelements (12) entlang der axialen Richtung des Felgenkörpers (11) angeordnet ist,
der Felgenkörper (11) ein erstes Material aufweist,
das erste Abdeckungselement (13) und das zweite Abdeckungselement (14) ein zweites Material aufweisen,
das erste Material sich von dem zweiten Material unterscheidet,
das erste Abdeckungselement (13) und das zweite Abdeckungselement (14) unterschiedlich ausgebildet sind, und
die erste Radbaugruppe (10) auf einer linken Seite des Fahrzeugs (100) und die zweite Radbaugruppe (10) auf einer rechten Seite des Fahrzeugs (100) relativ zu einer Fahrtrichtung (20) des Fahrzeugs (100) anordenbar ist,
wobei das erste Abdeckungselement (13) der ersten Radbaugruppe (10) und das erste Abdeckungselement (13) der zweiten Radbaugruppe (10) spiegelbildlich zueinander ausgebildet sind.

2. Radsystem (20) nach Anspruch 1, wobei jedes der ersten Abdeckungselemente (13) und der zweiten Abdeckungselemente (14) eine Vielzahl von Lüftungsöffnungen (15, 16) aufweist.

3. Radsystem (20) nach Anspruch 2, wobei die Vielzahl von Lüftungsöffnungen (15) des ersten Abdeckungselements (13) fluchtend zu der Vielzahl von Lüftungsöffnungen (16) des zweiten Abdeckungselements (14) angeordnet sind, wodurch eine Vielzahl von Lüftungskanälen (19) durch den Felgenkörper (11) gebildet wird.

4. Radsystem (20) nach einem der vorhergehenden Ansprüche, wobei die erste Seite eine Außenseite des Radscheibenelements (12) ist, die einer Umgebung ausgesetzt ist, und die zweite Seite eine Innenseite des Radscheibenelements (12) ist, die zu einem Inneren des Felgenkörpers (11) gerichtet ist.

5. Radsystem (20) nach einem der Ansprüche 2 bis 4, wobei die Vielzahl von Lüftungsöffnungen des ersten Abdeckungselements (13) strömungsgerecht zur Fahrtrichtung des Fahrzeugs (100) ausgebildet ist.

6. Radsystem (20) nach einem der vorhergehenden Ansprüche, wobei das zweite Abdeckungselement (14) eine nahtlose Oberfläche aufweist.

7. Radsystem (20) nach Anspruch 1, wobei das erste Material ein metallisches Material umfasst.

8. Radsystem (20) nach Anspruch 1, wobei das zweite Material ein Kunststoffmaterial umfasst.

9. Radsystem (20) nach einem der vorhergehenden Ansprüche, wobei das erste Abdeckungselement (13) und/oder das zweite Abdeckungselement (14) mittels mindestens eines Klemmmittels (17) am Felgenkörper (11) befestigt ist/sind.

10. Radsystem (20) nach dem vorhergehenden Anspruch, wobei das mindestens eine Klemmmittel (17) integral mit dem ersten Abdeckungselement (13) und/oder dem zweiten Abdeckungselement (14) ausgebildet ist.

11. Radsystem (20) nach einem der vorhergehenden Ansprüche, wobei das erste Abdeckungselement (13) und/oder das zweite Abdeckungselement (14) mittels mindestens eines mechanischen Befestigungsmittels (18) am Felgenkörper (11) befestigt ist/sind.

12. Fahrzeug (100), aufweisend ein Radsystem (20) nach einem der vorhergehenden Ansprüche.

13. Verfahren zur Herstellung eines Radsystems (20), umfassend mindestens eine erste und eine zweite Radbaugruppe (10), wobei die erste Radbaugruppe (10) auf einer linken Seite eines Fahrzeugs (100) und die zweite Radbaugruppe (10) auf einer rechten Seite des Fahrzeugs (100) relativ zu einer Fahrtrichtung (20) des Fahrzeugs (100) anordenbar ist, wobei das Verfahren für jede Radbaugruppe (10) folgende Schritte umfasst:
- Bereitstellen eines zylindrisch ausgebildeten Felgenkörpers (11), der mindestens ein Radscheibenelement (12) aufweist, das in einer axialen Richtung (A) des Felgenkörpers (11) angeordnet ist,
wobei der Felgenkörper (11) ein erstes Material aufweist,
- Bereitstellen eines ersten Abdeckungselements (13), das ein zweites Material aufweist, und eines zweiten Abdeckungselements (14), das ein zweites Material aufweist, und
- Anordnen des ersten Abdeckungselements (13) an einer ersten Seite des Radscheibenelements (12) und Anordnen des zweiten Abdeckungselements (14) an einer zweiten Seite des Radscheibenelements (12) entlang der axialen Richtung des Felgenkörpers (11),
wobei sich das erste Material von dem zweiten Material unterscheidet,
das erste Abdeckungselement (13) und das zweite Abdeckungselement (14) unterschiedlich ausgebildet sind, und
das erste Abdeckungselement (13) der ersten Radbaugruppe (10) und das erste Abdeckungselement (13) der zweiten Radbaugruppe (10) spiegelbildlich zueinander ausgebildet sind.

## Revendications

1. Système de roue (20) pour un véhicule (100), comprenant au moins un premier et un second ensemble roue (10),
le premier et le second ensemble roue (10) comprenant chacun,
- un corps de jante (11) de forme cylindrique,
- un premier élément de recouvrement (13), et
- un second élément de recouvrement (14),
le corps de jante (11) comprenant au moins un élément de disque de roue (12) disposé dans une direction axiale (A) du corps de jante (11),
le premier élément de recouvrement (13) étant disposé sur un premier côté de l'élément de disque de roue (12) et le second élément de recouvrement (14) étant disposé sur un second côté de l'élément de disque de roue (12) le long de la direction axiale du corps de jante (11),
le corps de la jante (11) comprenant un premier matériau, le premier élément de recouvrement (13) et le second élément de recouvrement (14) comprenant un second matériau, le premier matériau étant différent du second matériau,
le premier élément de recouvrement (13) et le second élément de recouvrement (14) étant formés différemment l'un de l'autre, et
le premier ensemble roue (10) pouvant être disposé sur le côté gauche du véhicule (100) et le second ensemble roue (10) pouvant être disposé sur le côté droit du véhicule (100) par rapport à une direction de conduite (20) du véhicule (100),
dans lequel le premier élément de recouvrement (13) du premier ensemble roue (10) et le premier élément de recouvrement (13) du second ensemble roue (10) étant formés en miroir l'un par rapport à l'autre.

2. Système de roue (20) selon la revendication 1, chacun du premier élément de recouvrement (13) et du second élément de recouvrement (14) comprenant une pluralité de trous d'aération (15, 16).

3. Système de roue (20) selon la revendication 2, la pluralité de trous d'aération (15) du premier élément de recouvrement (13) étant alignée avec la pluralité de trous d'aération (16) du second élément de recouvrement (14) pour former une pluralité de canaux d'aération (19) à travers le corps de jante (11).

4. Système de roue (20) selon l'une quelconque des revendications précédentes, le premier côté étant un côté extérieur de l'élément de disque de roue (12) exposé à un environnement et le second côté étant un côté intérieur de l'élément de disque de roue (12) dirigé vers un intérieur du corps de jante (11).

5. Système de roue (20) selon l'une quelconque des revendications 2 à 4, la pluralité de trous d'aération du premier élément de recouvrement (13) étant formée pour être compatible avec une direction de conduite du véhicule (100).

6. Système de roue (20) selon l'une quelconque des revendications précédentes, le second élément de recouvrement (14) comprenant une surface sans soudure.

7. Système de roue (20) selon la revendication 1, le premier matériau comprenant un matériau métallique.

8. Système de roue (20) selon la revendication 1, le second matériau comprenant une matière plastique.

9. Système de roue (20) selon l'une quelconque des revendications précédentes, le premier élément de recouvrement (13) et/ou le second élément de recouvrement (14) étant montés sur le corps de jante (11) par au moins un moyen de serrage (17).

10. Système de roue (20) selon la revendication précédente, l'au moins un moyen de serrage (17) étant formé d'un seul tenant avec le premier élément de recouvrement (13) et/ou le second élément de recouvrement (14).

11. Système de roue (20) selon l'une quelconque des revendications précédentes, le premier élément de recouvrement (13) et/ou le second élément de recouvrement (14) étant montés sur le corps de jante (11) par au moins un moyen de fixation mécanique (18).

12. Véhicule (100) comprenant un système de roue (20) selon l'une quelconque des revendications précédentes.

13. Procédé de fabrication d'un système de roue (20) comprenant au moins un premier et un second ensemble roue (10), le premier ensemble roue (10) pouvant être disposé sur le côté gauche d'un véhicule (100) et le second ensemble roue (10) pouvant être disposé sur le côté droit du véhicule (100) par rapport à une direction de conduite (20) du véhicule (100), le procédé comprenant pour chaque ensemble roue (10) les étapes suivantes :
- la fourniture d'un corps de jante (11) de forme cylindrique et comprenant au moins un élément de disque de roue (12) disposé dans une direction axiale (A) du corps de jante (11),
le corps de la jante (11) comprenant un premier matériau,
- la fourniture d'un premier élément de recouvrement (13) comprenant un second matériau et d'un second élément de recouvrement (14) comprenant le second matériau, et
- la disposition du premier élément de recouvrement (13) sur un premier côté de l'élément de disque de roue (12) et la disposition du second élément de recouvrement (14) sur un second côté de l'élément de disque de roue (12) le long de la direction axiale du corps de jante (11),
le premier matériau étant différent du second matériau,
le premier élément de recouvrement (13) et le second élément de recouvrement (14) étant formés différemment l'un de l'autre, et
le premier élément de recouvrement (13) du premier ensemble roue (10) et le premier élément de recouvrement (13) du second ensemble roue (10) étant formés en miroir l'un par rapport à l'autre.
